# EUROPÄISCHE PATENTSCHRIFT

(11) **EP 1 167 849 B1**
(45) Veröffentlichungstag und Bekanntmachung des Hinweises auf die Patenterteilung: **16.02.2005**
(21) Anmeldenummer: 01114306.2
(22) Anmeldetag: 13.06.2001
(51) Int. Cl.: F16K 31/56

(54) **Sicherheitsvorrichtung**
Safety device
Dispositif de sécurité

(30) Priorität: 24.06.2000 DE 10030948; 13.07.2000 DE 10034077
(43) Veröffentlichungstag der Anmeldung: 02.01.2002
(73) Patentinhaber: Veenker, Manfred, Dr.-Ing., D-30173 Hannover (DE)
(72) Erfinder: Veenker, Manfred, Dr.-Ing., D-30173 Hannover (DE)
(74) Vertreter: Vonnemann, Gerhard, Dr.-Ing.

(56) Entgegenhaltungen:
- EP-A- 0 054 602
- DE-A- 4 133 424
- DE-U- 7 116 946
- GB-A- 2 159 249
- US-A- 5 960 807

## Beschreibung

Die Erfindung betrifft eine Sicherheitsvorrichtung gemäß dem Oberbegriff des Anspruches 1.

Eine Sicherheitsvorrichtung mit den im Oberbegriff von Anspruch 1 definierten Merkmalen ist aus der DE-A-41 33 424 bekannt.

In der Vergangenheit kam es durch unsachgemäßen Umgang mit Gasgeräten, vernachlässigter Wartung von Geräten und Einrichtungen und laienhaftes Hantieren an Gasinstallationen zu schwerwiegenden Unfällen. Es gibt heute in der Industrie schon anwendbare Gasalarmsysteme, die sich jedoch für die Anwendung im Haushalt und in der Kleingewerbeindustrie nicht eignen. Darüber hinaus ist die Beschaffung und die Unterhaltung derartiger Systeme sehr teuer. Die schon erhältlichen Gasmelder für den Haushalt sind zwar preiswert, für eine wirksame Alarmierung jedoch nicht geeignet. Auch fehlen geeignete sicherheitsgerichtete Absperreinrichtungen völlig.

Die Aufgabe der Erfindung besteht darin, eine Sicherheitsvorrichtung vorzuschlagen, die für die Anwendung im Haushalt und in der Kleinindustrie geeignet ist und zusätzlich kostengünstig herzustellen ist.

Die der Erfindung zugrundeliegende Aufgabe wird durch eine Sicherheitsvorrichtung gemäß Anspruch 1 gelöst.

Im störungsfreien Betrieb wird der Druckkanal von Gas durchströmt. Der Druckkanal steht mit der ankommenden Hauptgasleitung in direkter Verbindung und dient zur Durchleitung. Der Federmechanismus befindet sich in einer Niederdruckkammer mit geringerem Gesamtdruck als der Druck in der Druckkammer. Die Niederdruckkammer ist gegenüber dem Druckkanal mittels einer Abdichteinheit abgedichtet. Die Abdichteinheit wiederum ist mit einem Stempel, der Federmechanismus und Ventil verbindet, verbunden. Der Druck auf die Fläche der Abdichteinheit erzeugt eine Kraft, die größer als die Federkraft des Federmechanismus und dieser entgegengerichtet ist. Kommt es zu einem Druckausgleich zwischen Niederdruckkammer und Druckkanal wird die der Federkraft entgegenwirkende Druckkraft kompensiert. Die Einheit bestehend aus Abdichteinheit, Stempel und Ventilkegel wird in Richtung Abdichtstelle bewegt. Der Ventilkegel verschließt die ankommende Gasleitung. Dadurch kann kein weiteres Gas ausströmen. Eine Explosion kann somit vermieden werden.

Es ist mit Vorteil vorgesehen, dass die Abdichteinheit ein flacher Zylinder mit umfangseitiger Dichtung ist. Diese Bauweise ist einfach und kostengünstig.

Vorteilhaft ist auch die Maßnahme, dass der Auslösemechanismus ein Federmechanismus ist. Der Federmechanismus hat als Auslösemechanismus die Energie zur Betätigung des Ventils gespeichert. Zur Betätigung des Ventils und damit zur Abdichtung der Gasleitung muß keine elektrische Energie, beispielsweise zur Betätigung eines Elektromotors etc. aufgewendet werden. Ein zusätzlicher Vorteil ist, dass der Federmechanismus den Ventilkegel ohne Verzögerung über dem Ventilsitz an die Hauptgasleitung andrückt. Die Absperrung der Gasleitung erfolgt in einem Bruchteil von Sekunden.

Vorteilhaft ist auch die Maßnahme dass Niederdruckkammer und Druckkanal mittels eines verschließbaren Ausgleichkanals verbunden sind. Dieser dient dazu im Falle einer Gasdetektion, einen Druckausgleich zwischen Niederdruckkammer und Druckkanal zu ermöglichen.

Mit Vorteil erfolgt die Abdichtung des Ausgleichkanals mittels eines Ventils. Dieses Ausgleichventil ist beispielsweise magnetgesteuert. Durch die kleinen Abmessungen wird zum Öffnen wenig Energie benötigt. Die Energieversorgung erfolgt netzunabhängig, beispielsweise mittels Batterie.

Es ist mindestens eine Steuereinheit und mindestens eine Schaltlogik zur Auslösung und Betätigung des Ausgleichventils vorgesehen, die mit netzunabhängiger Energie versorgt sind, somit kann selbst im Falle eines Stromausfalls das Ausgleichventil betätigt werden. Dadurch wird Druckausgleich zwischen Niederdruckkammer und Druckkanal hergestellt. Der Federmechanismus wird dadurch ausgelöst und die Gasleitung verschlossen.

Mit Vorteil besteht die Erfindung auch aus einem Verfahren zum Betreiben einer Sicherungsvorrichtung nach einem der vorhergehenden Ansprüche. Das Verfahren weist folgende Schritte auf: Detektion von Gas mittels mindestens eines Gasdetektors, Weiterleitung eines Signals an eine Schaltlogik und Steuereinheit, Ausgabe eines Auslösebefehls durch die Schaltlogik, Öffnung eines Ausgleichventils in einem Ausgleichkanal zwischen Niederdruckkammer und Druckkanal zur Auslösung eines Federmechanismus und Abdichtung der Gaszufuhrleitung mittels durch die Federkraft betätigtem Ventilkegel.

Gasdetekoren mit niedriger Erkennungsschwelle erzeugen mit Hilfe eines Alarmauslösers einen entsprechenden elektronischen Auslösebefehl. Dieser wird an eine Steuereinheit mit Schaltlogik über Funk oder Datenkabel weitergeleitet. Die Steuereinheit öffnet ein Ausgleichventil im Ausgleichkanal zwischen Niederdruckkammer und Druckkanal, wodurch ein Druckausgleich erreicht wird. Der Druckausgleich hat die Auslösung eines Federmechanismus zur Folge, wodurch die Hauptgasleitung mittels eines Ventilkegels abgedichtet wird.

Wird durch einen Gasdetektor ein Gasaustritt festgestellt, wird der Auslösemechanismus ausgelöst, wodurch der Ventilkegel die Gasleitung über dem Ventilsitz abdichtet. So kann kein weiteres Gas in den Haushalt bzw. in den Gewerbebetrieb gelangen. Explosionen werden somit mit Vorteil vermieden. Der Gasdetektor ist nicht Gegenstand der Neuentwicklung, da hier bereits verschiedene Fabrikate mit unterschiedlichen Intensitätsschwellen auf dem Markt sind. Mit Vorteil wird die Sicherheitsvorrichtung außerhalb von Gebäuden und Räumen in die Gasleitung integriert. Dadurch wird das Explosionsrisiko weiter vermindert.

Der oder die Gasdetektoren sind in der Lage bereits geringste Gasleckagen zu detektieren. Die Ansprechschwelle liegt weit unter den kritischen Konzentrationen eines Explosionsgemisches. Mit Vorteil werden die Gasdetektoren in Räumen installiert, in denen Gasleckagen vermutet werden. Jeder Gasdetektor ist mit einem Alarmauslöser verbunden, der wiederum über Kabel oder Funk mit einer Schaltlogik im oder am Auslösemechanismus verbunden ist. Es können mehrere Gasdetektoren zur Überwachung mehrerer Räume mit nur einer Schaltlogik verknüpft werden.

Mit Vorteil wird der Auslösebefehl solange ausgegeben, bis kein Gas mehr detektiert wird. Sollte das Ausgleichventil manuell oder durch eine sonstige Vorrichtung wieder geschlossen werden, obwohl noch Gas detektiert wird, wird das Ausgleichventil sogleich wieder geöffnet. Ein Verschließen des Ausgleichventils ist erst möglich, wenn kein Gas mehr detektiert wird und dadurch kein Auslösebefehl mehr ausgegeben wird.

Um die Sicherheit weiter zu erhöhen ist mit Vorteil vorgesehen, dass die Entlüftung der Niederdruckkammer manuell erfolgt. Dadurch wird gewährleistet, dass die Druckreduzierung in der Niederdruckkammer und damit die Spannung des Federmechanismus erst erfolgt, wenn die kritische Situation beseitigt ist.

Gemäß einer Weiterbildung des Verfahrens ist vorgesehen, dass bei unsachgemäßer Bedienung immer ein Auslösebefehl ausgegeben wird. Dadurch wird eine maximale Sicherheit gewährleistet. Die Gasleitung wird also immer dann verschlossen, wenn durch unsachgemäße Manipulation an der Sicherheitsvorrichtung ein Risiko entsteht.

Eine weitere vorteilhafte Ausgestaltung des erfindungsgemäßen Verfahrens sieht vor, dass durch die Schaltlogik Befehle zur Abschaltung weiterer, vorzugsweise elektrischer Geräte ausgegeben werden. Dadurch wird das Risiko einer Explosion weiter reduziert.

Mit Vorteil ist vorgesehen, dass eine automatische Nachrichtenübermittlung erfolgt. Beispielsweise können Feuerwehr oder Instandhalter der Sicherheitsvorrichtung automatisch alarmiert werden. Dies ist von Vorteil, da im Falle von Abwesenheit der Hausbewohner etc., der Fehler nicht umgehend behoben werden könnte.

Besonders hohe Sicherheit wird dadurch erreicht, dass die Sicherheitsvorrichtung außerhalb von Gebäuden angebracht wird.

Anhand einer Zeichnung, die ein Ausführungsbeispiel der Erfindung darstellt, wird die Erfindung näher beschrieben.

Es zeigt:

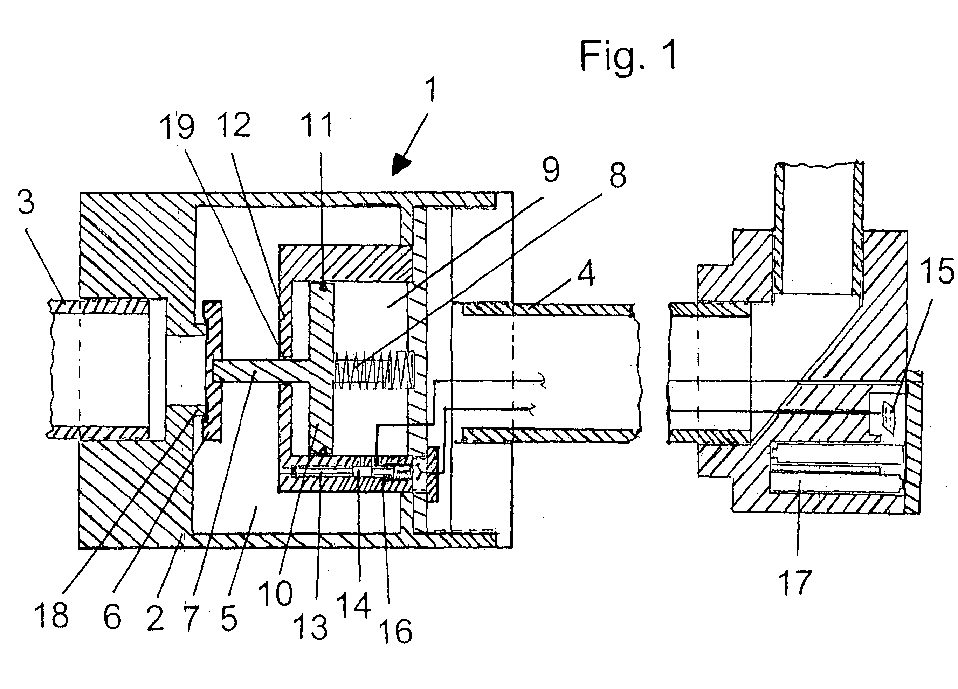

- Fig. 1:: eine schematische Darstellung der Sicherheitsvorrichtung.

In Figur 1 ist die Sicherheitsvorrichtung 1 dargestellt. Sie besteht aus einem Gehäuse 2, in das eine ankommende Hauptgasleitung 3 mündet. Das Gas durchströmt die Sicherheitsvorrichtung 1 und wird über eine Versorgungsleitung 4 an die Verbraucher geleitet. Hinter der Einmündung der Hauptgasleitung 3 befindet sich ein Druckkanal 5. In diesem Druckkanal 5 ist ein Ventilkegel 6 zur Abdichtung der eingehenden Hauptgasleitung 3 vorgesehen. Der Ventilkegel 6 ist mittels eines Stempels 7 mit einem Federmechanismus 8 verbunden. Der Federmechanismus 8 ist innerhalb einer Niederdruckkammer 9 angeordnet. Die Abdichtung der Niederdruckkammer 9 gegenüber dem Druckkanal 5 erfolgt über eine Abdichteinheit 10, die als flacher Zylinder ausgebildet und mit dem Stempel 7 verbunden ist. Umfangsseitig der Abdichteinheit 10 befindet sich eine Ringdichtung 11. Die der Feder abgewandte Niederdruckkammerwand 12 wird vom Stempel 7 durchbrochen. Der Durchgang 19 hat genügend Spiel um einen Gasdurchfluß zu ermöglichen. Der auf die Abdichteinheit 10 wirkende Gasdruck erzeugt eine Druckkraft, die im Betrag größer oder gleich der Federkraft ist und dieser entgegenwirkt. Die Niederdruckkammer 9 ist über einen Ausgleichkanal 13 mit dem Druckkanal 5 verbunden. Der Ausgleichkanal 13 ist mittels eines Ausgleichventils 14 abgedichtet. Das Ausgleichventil 14 ist beispielsweise ein Magnetventil.

Wird nun mittels nicht dargestellter Gasdetektoren ein Gasleck identifiziert, so wird ein elektronisches Signal über Funk oder Datenkabel an die Schaltlogik 15 geleitet, die wiederum mit einer Steuereinheit 16 verbunden ist. Die Steuereinheit 16 erhält im Fall einer Gasdetektion von der Schaltlogik 15 einen Auslösebefehl. Die Steuereinheit 16 öffnet sogleich das Ausgleichventil 14, wodurch Gas in die Niederdruckkammer 9 strömt. Es findet Druckausgleich statt. Die Schaltlogik 15 und die Steuereinheit 16 werden in diesem Ausführungsbeispiel mit elektrischer Energie aus Batterien 17 versorgt.

Wenn Druckausgleich zwischen Niederdruckkammer 10 und Druckkanal 5 hergestellt ist, entspannt sich die Feder, wodurch der Ventilkegel 6 gegen den Ventilsitz 18 der Hauptgasleitung 3 gedrückt wird. Die Gaszufuhr ist somit unterbunden. Die Sicherheitsvorrichtung 1 wird mit Vorteil außerhalb von Gebäuden in die Gasleitung eingebaut.

### Bezugszeichenliste

- 1: Sicherheitsvorrichtung
- 2: Gehäuse
- 3: Hauptgasleitung
- 4: Versorgungsleitung
- 5: Druckkanal
- 6: Ventilkegel
- 7: Stempel
- 8: Federmechanismus
- 9: Niederdruckkammer
- 10: Abdichteinheit
- 11: Ringdichtung
- 12: Niederdruckkammerwand
- 13: Ausgleichkanal
- 14: Ausgleichventil
- 15: Schaltlogik
- 16: Steuereinheit
- 17: Batterie
- 18: Ventilsitz
- 19: Durchgang

## Patentansprüche

1. Sicherheitsvorrichtung mit mindestens einer Absperrvorrichtung zur Abdichtung der Hauptgasleitung (3) und mit mindestens einem Ventilkegel, wobei der Ventilkegel (6) mit einem Auslösemechanismus (8) verbunden ist, wobei der Auslösemechanismus ein innerhalb einer Niederdruckkammer angeordneter Federmechanismus (8) ist, wobei die Niederdruckkammer (9) gegenüber einem Druckkanal (5), in dem sich der Ventilkegel (6) befindet, mittels einer, mit einem Stempel (7) verbundenen Abdichteinheit (10) abgedichtet ist, wobei der Stempel (7) eine Wirkverbindung zwischen Ventilkegel (6) und Federmechanismus (8) herstellt, und dass die Abdichteinheit (10) ein flacher Zylinder mit umfangseitiger Dichtung (11) ist, wobei die Niederdruckkammer (9) und der Druckkanal (5) mittels eines mittels Ausgleichsventils (14) verschließbaren Ausgleichskanals (13) verbunden sind, **dadurch gekennzeichnet, dass** mindestens eine Steuereinheit (16) und mindestens eine Schaltlogik (15), zur Auslösung und Betätigung des Ausgleichventils (14) vorgesehen sind, die mit netzunabhängiger Energie versorgt sind, wobei die Schaltlogik mit einem Gasdetektor in Wirkverbindung steht.

2. Sicherheitsvorrichtung nach Anspruch 1, **dadurch gekennzeichnet, dass** die Niederdruckkammer (9) eine Entlüftungsvorrichtung aufweist.

3. Verfahren zum Betreiben einer Sicherheitsvorrichtung nach einem der Ansprüche 1 oder 2, **gekennzeichnet, durch** folgende Verfahrenschritte:
- Detektion von Gas mittels mindestens eines Gasdetektors;
- Weiterleitung eines Signals an eine Schaltlogik (15) und Steuereinheit (16);
- Ausgabe eines Auslösebefehls **durch** die Schaltlogik (15);
- Öffnung eines Ausgleichventils (14) in einem Ausgleichkanal (13) zwischen Niederdruckkammer (9) und Druckkanal (5) zur Auslösung eines Federmechanismus (8);
- Abdichtung der Hauptgasleitung (3) mittels **durch** die Federkraft betätigtem Ventilkegel (6).

4. Verfahren nach Anspruch 3, **dadurch gekennzeichnet, dass** der Auslösebefehl solange ausgegeben wird, bis kein Gas mehr detektiert wird.

5. Verfahren nach Anspruch 4, **dadurch gekennzeichnet, dass** die Entlüftung der Niederdruckkammer (9) manuell erfolgt.

6. Verfahren nach Anspruch 5, **dadurch gekennzeichnet, dass** bei unsachgemäßer Bedienung immer ein Auslösebefehl ausgegeben wird.

7. Verfahren nach Anspruch 6, **dadurch gekennzeichnet, dass** durch die Schaltlogik (15) Befehle zur Abschaltung weiterer, vorzugsweise elektrischer Geräte ausgibt.

8. Verfahren nach Anspruch 7, **dadurch gekennzeichnet, dass** eine automatische Nachrichtenübermittlung erfolgt.

9. Verfahren nach Anspruch 8, **dadurch gekennzeichnet, dass** die Sicherheitsvorrichtung (1) außerhalb von Gebäuden angebracht wird.

## Claims

1. A safety device with at least one shut-off device for sealing the main gas conduit (3) and with at least one valve face. wherein the valve face (6) is connected to an activation mechanism (8), wherein the activation mechanism is a spring mechanism (8) arranged within a low-pressure chamber, wherein the low-pressure chamber (9), by way of a sealing unit (10) connected to a plunger (7), is sealed with respect to a pressure channel (5) in which the valve face (6) is located, wherein the plunger (7) creates an active connection between the valve face (6) and the spring mechanism (8), and that the sealing unit (10) is a flat cylinder with a peripheral seal (11), wherein the low-pressure chamber (9) and the pressure channel (5) are connected by way of a compensation channel (13) closable by way of a compensation valve (14), **characterised in that** at least one control unit (16) and at least one circuit logic (15) are provided for activating and actuating the compensation valve (14), which are supplied with energy independently of the mains supply, wherein the circuit logic is actively connected to a gas detector.

2. A safety device according to claim 1, **characterised in that** the low-pressure chamber (9) comprises a bleed device.

3. A method for operating a safety device according to one of the claims 1 and 2, **characterised by** the following method steps:
- detection of gas by way of at least one gas detector;
- further leading of a signal to a circuit logic (15) and control unit (16);
- output of an activation command by the circuit logic (15);
- opening of a compensation valve (14) in a compensation channel (13) between the low-pressure chamber (9) and the pressure channel (5) for activating the spring mechanism (8);
- sealing of the main gas conduit (3) by way of a valve face (6) actuated by way of spring force.

4. A method according to claim 3, **characterised in that** the activation command is outputted until gas is no longer detected.

5. A method according to claim 4, **characterised in that** the bleeding of the low-pressure chamber (9) is effected manually.

6. A method according to claim 5, **characterised in that** an activation command is always outputted with an improper operation.

7. A method according to claim 6, **characterised in that** the circuit logic (15) outputs commands for switching-off further, preferably electrical apparatus.

8. A method according to claim 7, **characterised in that** an automatic information transmission is effected.

9. A method according to claim 8, **characterised in that** the safety device (1) is attached outside buildings.

## Revendications

1. Dispositif de sécurité avec au moins un dispositif d'arrêt pour étancher la conduite principale de gaz (3) et avec au moins un cône de soupape, dans lequel le cône de soupape (6) est relié à un mécanisme de déclenchement (8), le mécanisme de déclenchement est un mécanisme à ressort (8) monté à l'intérieur d'une chambre à basse pression, la chambre à basse pression (9) est étanchée par rapport à une conduite pressurisée (5) dans laquelle se trouve le cône de soupape (6) au moyen d'une unité d'étanchéité (10) reliée à un piston (7), le piston (7) établit une liaison active entre le cône de soupape (6) et le mécanisme à ressort (8), l'unité d'étanchéité (10) étant un cylindre plat avec un joint d'étanchéité périphérique (11), dans lequel la chambre à basse pression (9) et la conduite pressurisée (5) sont reliées au moyen d'une conduite d'équilibrage (13) obturable au moyen d'une soupape d'équilibrage (14),
**caractérisé en ce que**
pour déclencher et actionner la soupape d'équilibrage (14) sont prévus au moins une unité de commande (16) et au moins un élément logique de commutation (15) qui sont alimentés en énergie indépendamment du secteur, l'élément logique de commutation étant en liaison active avec un détecteur de gaz.

2. Dispositif de sécurité selon la revendication 1,
**caractérisé en ce que**
la chambre à basse pression (9) présente un dispositif de purge d'air.

3. Procédé pour faire fonctionner un dispositif de sécurité selon une des revendications 1 ou 2,
**caractérisé par**
les étapes suivantes :
- détection de gaz au moyen d'au moins un détecteur de gaz;
- transmission d'un signal à un élément logique de commutation (15) et à une unité de commande (16);
- émission d'un ordre de déclenchement par l'élément logique de commutation (15);
- ouverture d'une soupape d'équilibrage (14) dans une conduite d'équilibrage (13) entre la chambre à basse pression (9) et la conduite pressurisée (5) pour déclencher un mécanisme à ressort (8);
- étanchéité de la conduite principale de gaz (3) au moyen du cône de soupape (6) actionné par la force du ressort.

4. Dispositif de sécurité selon la revendication 3,
**caractérisé en ce que**
l'ordre de déclenchement est émis jusqu'à ce qu'il n'y ait plus de gaz détecté.

5. Dispositif de sécurité selon la revendication 4,
**caractérisé en ce que**
la purge d'air de la chambre à basse pression (9) se fait manuellement.

6. Dispositif de sécurité selon la revendication 5,
**caractérisé en ce qu'**
un ordre de déclenchement est toujours émis en cas de manipulation inappropriée.

7. Dispositif de sécurité selon la revendication 6,
**caractérisé en ce que**
des ordres pour arrêter d'autres appareils de préférence électriques sont émis par l'élément logique de commutation (15).

8. Dispositif de sécurité selon la revendication 7,
**caractérisé en ce qu'**
une transmission d'informations automatique a lieu.

9. Dispositif de sécurité selon la revendication 8,
**caractérisé en ce que**
le dispositif de sécurité (1) est installé à l'extérieur des bâtiments.
